# EUROPÄISCHE PATENTSCHRIFT

(11) **EP 0 270 961 B1**
(45) Veröffentlichungstag und Bekanntmachung des Hinweises auf die Patenterteilung: **22.09.1993**
(21) Anmeldenummer: 87117647.5
(22) Anmeldetag: 28.11.1987
(51) Int. Cl.: H01Q 1/12

(54) **Kraftfahrzeugscheibe**
Window glass for automobile
Vitre de véhicule automobile

(30) Priorität: 06.12.1986 DE 3641738
(43) Veröffentlichungstag der Anmeldung: 15.06.1988
(73) Patentinhaber: FLACHGLAS AKTIENGESELLSCHAFT, 90762 Fürth (DE)
(72) Erfinder: Armbruster, Günter, Dipl.-Phys., D-4150 Krefeld 1 (DE)
(74) Vertreter: Andrejewski, Walter

(56) Entgegenhaltungen:
- EP-A- 0 153 806
- EP-A- 0 155 647
- EP-A- 0 258 635
- DE-A- 2 701 921
- DE-B- 1 807 862
- DE-C- 730 131
- DE-U- 7 701 430

## Beschreibung

Die Erfindung betrifft eine Kraftfahrzeugscheibe aus zumindest einer Silikatglasscheibe, insbesondere aus Einscheibensicherheitsglas, die auf einer freien Oberfläche eine transmissionsmindernde Beschichtung (TRM-Beschichtung) aus mindestens einem Metall, einer Metallegierung oder einer Metall-Verbindung aufweist, welche Beschichtung zugleich als Scheibenantenne verwendet ist, wobei die Kraftfahrzeugscheibe in eine Fensteröffnung einer metallischen Kraftfahrzeugkarosserie unter Zwischenschaltung eines umlaufenden Einbauelementes aus Gummi oder Kunststoff oder in Form eines Einbauklebers einsetzbar ist.

Bei der bekannten Kraftfahrzeugscheibe des eingangs beschriebenen Aufbaus, von der die Erfindung ausgeht (DE-U 77 01 430), ist die TRM-Beschichtung nur im Sichtbereich aufgebracht. Der Randbereich der Kraftfahrzeugscheibe ist von der TRM-Beschichtung frei. Er faßt in eine Nut eines den Rand der Kraftfahrzeugscheibe außen umfassenden Gummieinfassungsrahmens ein. Der Gummieinfassungsrahmen bildet das Einbauelement und besitzt dazu auf der der Nut für die Aufnahme des Randes der Kraftfahrzeugscheibe gegenüberliegenden Rahmenseite eine Nut, in die der umgebördelte Rand des Karosseriebleches des Kraftfahrzeuges einfaßt, der die Fensteröffnung begrenzt. Würde man bei der bekannten Kraftfahrzeugscheibe den Einfassungsrahmen durch eine auf einen Einbaurandstreifen der Kraftfahrzeugscheibe aufgebrachte Auflage aus Gummi oder Kunststoff oder in Form eines Einbauklebers versehen und die Kraftfahrzeugscheibe mit der Auflage gegen das Karosserieblech im Bereich der Fensteröffnung setzen, so ginge bei der bekannten Kraftfahrzeugscheibe die Antennenfunktion verloren.

Bei einer anderen bekannten Kraftfahrzeugscheibe (DE-OS 27 01 921) ist auf der freien Oberfläche eine Beschichtung vorgesehen, die vollflächig oder bereichsweise die Kraftfahrzeugscheibe bedeckt und im Sinne der Erfindung als TRM-Beschichtung bezeichnet werden kann. Der mittlere, innere Bereich der TRM-Beschichtung, von dem vermutet wird, daß er nicht oder kaum der Abschirmwirkung der Karosserie unterliegt, soll als sogenannte Flächenantenne eingesetzt werden. Insoweit wird lediglich eine galvanische Trennung der TRM--Beschichtung von der Kraftfahrzeugkarosserie verlangt. Diese bekannten Maßnahmen sind, jedenfalls wenn die Beschichtung vollflächig aufgebracht ist, in bezug auf die Antennenwirkung verbesserungsbedürftig. Die vorstehend beschriebenen bekannten Maßnahmen übersehen die lange herrschende Baulehre (vgl. GB-PS 996 787, EP 0 153 806 A1), die betont, daß bei Kraftfahrzeugscheiben, die mit Antennenelementen ausgerüstet sind, die bis in den Randbereich geführt sind, eine Streukapazität entsteht, die den Empfang brauchbarer Radiosignale verhindert. Das dürfte der Grund sein, weshalb bei der zuerst beschriebenen Ausführungsform (DE-U 77 01 430) die TRM-Beschichtung nicht bis an den Rand der Kraftfahrzeugscheibe geführt ist und der aus Gummi bestehende Einfassungsrahmen die Beschichtung von dem Rand des Karosseriebleches im Bereich der Fensteröffnung distanziert.

Die heute üblichen Kraftfahrzeugscheiben mit TRM-Beschichtung sind aus fertigungstechnischen Gründen mit einer vollflächigen TRM-Beschichtung ausgerüstet. Diese TRM-Beschichtung dient optischen, nicht aber antennentechnischen Zwecken. Solche Kraftfahrzeugscheiben können aus einem Bandmaß der Glaserzeugung, welches vollflächig beschichtet wurde, ausgeschnitten werden. Sie sind nicht gleichzeitig als Kraftfahrzeug-Antennenscheiben einsetzbar, weil sie aus den dargestellten Gründen brauchbare Radiosignale kaum liefern. Eine nachträgliche Entfernung der TRM-Beschichtung im Randbereich einer solchen Kraftfahrzeugscheibe zum Zwecke des Einsatzes als Kraftfahrzeug-Antennenscheibe ist im Rahmen einer Massenproduktion nicht durchführbar.

Der Erfindung liegt die Aufgabe zugrunde, eine Kraftfahrzeugscheibe des eingangs beschriebenen Aufbaus so weiter auszubilden, daß sie auf einfache Weise gefertigt und unter Verzicht auf einen distanzbildenden Einfassungsrahmen aus Gummi in die Fensteröffnung einer Kraftfahrzeugkarosserie eingesetzt werden kann.

Zur Lösung dieser Aufgabe lehrt die Erfindung, daß die TRM-Beschichtung vollflächig aufgebracht ist und einen Einbaurandstreifen überfaßt, daß auf der TRM-Beschichtung im Bereich des Einbaurandstreifens eine Isolierauflage aus nichtleitendem Email aufgebracht und wie üblich eingebrannt wird. Eine bloße galvanische Trennung durch eine Isolierauflage aus beispielsweise Gummi oder Kunststoff würde die störenden Streukapazitäten nicht beseitigen. Von Vorteil ist, daß in antennentechnischer Hinsicht alle für Scheibenantennen im hochfrequenztechnischen Sinne bekannten Auslegungen ohne weiteres möglich sind. Man erreicht stets eine erstaunlich gute Antennenwirksamkeit, und zwar sowohl bei amplitudenmodulierten Rundfunkwellen als auch bei frequenzmodulierten Rundfunkwellen. Es versteht sich, daß die als Scheibenantenne wirkende TRM-Beschichtung durch die galvanische Verbindung unterbrechende Trennfugen und Felder in Streifen geteilt und dadurch hochfrequenzmäßig nach Maßgabe besonderer Funktionen eingerichtet werden kann. Von besonderem Vorteil ist die Tatsache, daß die erfindungsgemäße Kraftfahrzeugscheibe in antennentechnischer Hinsicht allen Anforderungen auch dann genügt, wenn die Antennenleiter gleichzeitig als Heizleiter für eine Beheizung der Kraftfahrzeugscheibe eingerichtet sind, oder umgekehrt, oder wenn die TRM-Beschichtung zusätzlich als Antennenleiter und als Heizleiter für eine Beheizung der Kraftfahrzeugscheibe eingerichtet ist.

Im einzelnen bestehen mehrere Möglichkeiten der weiteren Ausbildung und Gestaltung einer erfindungsgemäßen Kraftfahrzeugscheibe. So kann die Isolierauflage gegenüber dem Einbauelement zum Sichtbereich der Kraftfahrzeugscheibe hin verbreitert sein, so daß das Einbauelement eine Innenzone freiläßt, und ein oder mehrere Anschlußelemente oder Anschlußsammelschienen für die Scheibenantenne können auf der Innenzone der Isolierauflage angeordnet sowie in oder neben der Isolierauflage mit der TRM-Beschichtung leitend verbunden sein. Nach bevorzugter Ausführungsform der Erfindung ist dabei die Isolierauflage aus einer scheibenseitigen Grundschicht und einer Abdeckschicht zweischichtig aufgebaut, wobei die Abdeckschicht die Anschlußelemente oder die Anschlußsammelschienen auf der Innenzone abdeckt. Eine andere Lösung dieser Aufgabe ist dadurch gekennzeichnet, daß auf die TRM-Beschichtung leitfähige Antennenleiter aufgebracht sind, daß auf die TRM-Beschichtung des Einbaurandstreifens eine Isolierauflage aus nichtleitendem Email aufgebracht und eingebrannt ist. Dabei kann die Isolierauflage gegenüber dem Einbauelement verbreitert sein, so daß das Einbauelement auf der Isolierauflage eine Innenzone freiläßt und die Antennenleiter können mit ihren Enden und/oder mit mit den Antennenleitern verbundenen Sammelschienen auf der Innenzone der Isolierauflage angeordnet sein. Auch hier ist eine bevorzugte Ausführungsform der Erfindung dadurch gekennzeichnet, daß die Isolierauflage aus einer scheibenseitigen Grundschicht und einer Abdeckschicht zweischichtig aufgebaut ist. Die Abdeckschicht kann gegebenenfalls auch die auf der Grundschicht der Isolierauflage angeordneten Enden der Antennenleiter und/oder deren Sammelschienen abdecken. Bei der Ausführungsform mit zusätzlichen Antennenleitern können die Antennenleiter gleichzeitig als Heizleiter für eine Beheizung der Kraftfahrzeugscheibe eingerichtet sein - oder umgekehrt. Es versteht sich, daß die Anschlußeinrichtungen für abgehende Leiter außerhalb des Bereichs der Einbauelemente angeordnet sind.

Bei beiden erfindungsgemäßen Lösungen der angegebenen Aufgabe erreicht man eine erstaunlich gute Antennenwirksamkeit, und zwar sowohl bei amplitudenmodulierten Rundfunkwellen als auch bei frequenzmodulierten Rundfunkwellen. Es versteht sich, daß bei der Ausführungsform, bei der die TRM-Beschichtung als Scheibenantenne eingesetzt ist, die TRM-Beschichtung durch die galvanische Verbindung unterbrechende Trennfugen in Felder und Streifen aufgeteilt und dadurch hochfrequenzmäßig nach Maßgabe besonderer Funktionen eingerichtet werden kann. Die Aufteilung kann schon durch Abdeckungen bei der Herstellung sowie durch nachträgliche, insbesondere linienförmige Abtragung der TRM-Beschichtung erreicht werden. Die TRM-Beschichtung wirkt auch bei der Ausführungsform, bei der zusätzlich Antennenleiter aus leitendem Email aufgebracht sind, in hochfrequenzmäßiger Hinsicht vorteilhaft mit. Dazu bedarf es keiner besonderen Anschlüsse für die TRM-Beschichtung. Insoweit ist jedoch eine bevorzugte Ausführungsform der Erfindung dadurch gekennzeichnet, daß die TRM-Beschichtung zusätzlich als Antennenleiter eingerichtet und dazu mit entsprechenden Anschlüssen versehen ist. Das gibt in hochfrequenzmäßiger Hinsicht zusätzliche Schaltungsmöglichkeiten. Die TRM-Beschichtung kann aber auch als Heizleiter für eine Beheizung der Kraftfahrzeugscheibe eingerichtet sein.

Von besonderem Vorteil ist die Tatsache, daß eine erfindungsgemäße Kraftfahrzeugscheibe in hochfrequenztechnischer Hinsicht und damit in antennentechnischer Hinsicht eine Vielzahl von Möglichkeiten zuläßt. Ohne weiteres können die Schaltungen eingerichtet werden, die sich in der Hochfrequenz- und Antennentechnik bewährt haben, insbesondere können an einem Kraftfahrzeug mehrere erfindungsgemäße Kraftfahrzeugscheiben eingesetzt und schaltungsmäßig kombiniert werden (Diversity-Antennenschaltung).

Die TRM-Beschichtung besteht Vorzugsweise aus einer glasseitigen Metallschicht auf Basis von einem Metall der Gruppe "Platin, Iridium, Rhodium" oder Mischungen davon sowie einer dünnen Stabilisierungsschicht aus einem Oxid der Metalle der Gruppe "Wismut, Indium, Nickel, Antimon, Zinn, Tantal, Titan, Zink" oder Mischungen dieser Oxide. Die TRM-Beschichtung kann aber auch aus Siliziden Von Metallen mit den Ordnungszahlen 22 bis 28 des Periodensystems mit einem Siliziumgehalt von 45 bis 75 Atomprozent aufgebaut sein. Zweckmäßigerweise ist die TRM-Beschichtung mit einem Gleichspannungsflächenwiderstand Von größer als 20 Ohm, vorzugsweise größer als 60 Ohm, ausgerüstet. Die Isolierauflage aus nichtleitendem Email soll möglichst einen Hochfrequenzwiderstand von größer als 10⁶ Ohm aufweisen. Man bringt solche Auflagen im allgemeinen im Wege der Bedruckung mit anschließendem Einbrennen des Emails auf.

Die Erfindung beruht auf der überraschenden Feststellung, daß eine störende kapazitive Ankopplung der TRM-Beschichtung an die Kraftfahrzeugkarosserie durch die eingebrannte Isolierauflage aus nichtleitendem Email wirksam unterbunden wird. Überraschenderweise verliert die TRM-Beschichtung beim Einbrennen des Email praktisch ihre Leitfähigkeit, so daß sie unter der Isolierauflage eine verschwindend geringe Leitfähigkeit aufweist. Die TRM-Beschichtung steht in hauptsächlich induktiver Wechselwirkung mit dem Hochfrequenzfeld. Es entsteht in der TRM-Beschichtung eine flächige Stromverteilung. Der Abgriff erfolgt zweckmäßigerweise niederohmig.

Bekanntermaßen reicht eine gleichartige Überdruckung von aus leitfähigem Email hergestellten Antennenleitern nicht aus, um eine ausreichende kapazitive Entkopplung zwischen im Bereich der Einbauelemente angeordneten Antennenleitern und der Kraftfahrzeugkarosserie zu bewirken. Daher sind bei erfindungsgemäßen Kraftfahrzeugscheiben die leitfähigen Antennenleiter außerhalb des Einbauelementes angeordnet.

Im folgenden wird die Erfindung anhand einer lediglich ein Ausführungsbeispiel darstellenden Zeichnung ausführlicher erläutert. Es zeigen in schematischer Darstellung
- Fig. 1: Ausschnitte aus einer erfindungsgemäßen Kraftfahrzeugscheibe in der Draufsicht,
- Fig. 2: einen Schnitt in Richtung A-A durch den Gegenstand nach Fig. 1 und
- Fig. 3: entsprechend der Fig. 2 eine andere Ausführungsform.

In den Figuren wurden aus Gründen der zeichnerischen Deutlichkeit die Leiter und Schichten übertrieben breit bzw. dick gezeichnet. Das gilt auch für die Streifen im Bereich des Randes.

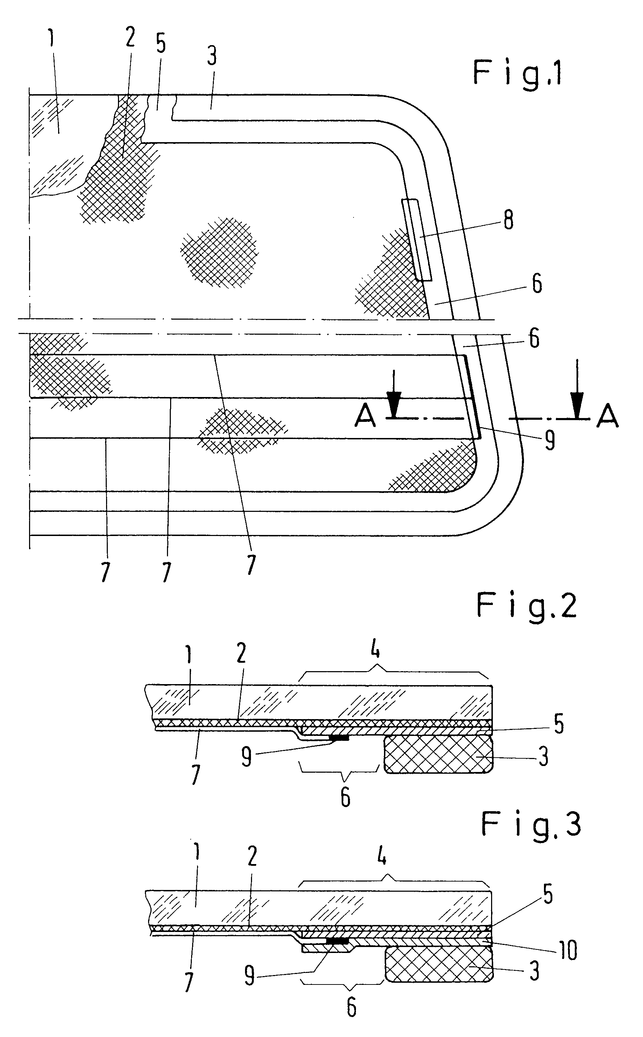

Die in den Figuren dargestellte Kraftfahrzeugscheibe 1 besteht aus einer Silikatglasscheibe, und zwar aus Einscheibensicherheitsglas. Auf der zum Kraftfahrzeuginnenraum gerichteten Oberfläche befindet sich eine transmissionsmindernde Beschichtung 2 (TRM-Beschichtung) aus mindestens einem Metall, einer Metallegierung oder einer Metallverbindung. Aus den Fig. 2 und 3 entnimmt man, daß die TRM-Beschichtung 2 vollflächig aufgetragen wurde. Die Kraftfahrzeugscheibe 1 ist in eine nicht gezeichnete Fensteröffnung einer metallischen Kraftfahrzeugkarosserie unter Zwischenschaltung eines umlaufenden Einbauelementes 3 im Bereich eines sogenannten Einbaurandstreifens 4 einsetzbar. Das Einbauelement 3 ist im Ausführungsbeispiel ein Einbaukleber.

Um die TRM-Beschichtung als Scheibenantenne wirken oder mitwirken zu lassen, ist auf die TRM-Beschichtung des Einbaurandstreifens 4 eine Isolierauflage 5 aus nichtleitfähigem Email aufgebracht, und zwar eingebrannt. Sie ist im Ausführungsbeispiel gegenüber dem Einbauelement verbreitert. Das Einbauelement 3 ist auf eine scheibenrandseitige Randzone der Isolierauflage 5 aufgebracht und läßt eine Innenzone 6 frei. Das gilt zunächst für die Ausführungsform einer erfindungsgemäßen Kraftfahrzeugscheibe 1, die in Fig. 1 oben dargestellt ist. Diese besitzt keine zusätzlichen Antennenleiter. Das gilt aber auch für die Ausführungsform, die in Fig. 1 unten dargestellt und mit zusätzlichen Antennenleitern 7 ausgerüstet ist. In beiden Fällen könnte die Innenzone 6 fehlen, die im übrigen als optische Verblendung oder Sichtschutzrandstreifen funktioniert. Sie verbessert aber auch die elektrischen Verhältnisse. Man erkennt im oberen Teil der Fig. 1, daß ein Anschlußelement 8 für die Scheibenantenne auf der Innenzone 6 der Isolierauflage 5 angeordnet sowie neben der Isolierauflage 5 mit der TRM-Beschichtung 2 leitend verbunden ist. Ein Schnitt durch diese Anordnung sieht grundsätzlich so aus, wie es in Fig. 2 dargestellt wurde, wobei allerdings für die Ausführungsform nach Fig. 1 oben der in Fig. 2 erkennbare Antennenleiter mit dem Anschlußelement 8 zu identifizieren ist. Bei der Ausführungsform, bei der auf die TRM-Beschichtung 2 leitfähige Antennenleiter 7, z. B. aus leitfähigem Email, aufgebracht sind, sind diese bis an den Einbaurandstreifen 4 geführt. Sie enden vor dem Bereich des Einbauelementes 3. Auch hier ist auf die TRM-Beschichtung 2 des Einbaurandstreifens 4 eine Isolierauflage 5 aus nichtleitendem Email aufgebracht, und zwar eingebrannt. Das Einbauelement 3 ist auf eine scheibenrandseitige Randzone der Isolierauflage 5 aufgebracht und läßt wieder eine Innenzone 6 frei. Die Anordnung ist so getroffen, daß die Antennenleiter 7 mit ihren Enden und/oder mit mit den Antennenleitern verbundenen Sammelschienen 9 auf der Innenzone 6 der Isolierauflage 5 angeordnet sind.

Die Fig. 3 zeigt, daß auch mit einer zweischichtigen Isolierauflage 5, 10 aus einer scheibenseitigen Grundschicht 5 und einer Abdeckschicht 10 gearbeitet werden kann. Die Anordnung ist so getroffen, daß die Abdeckschicht 10 die auf der Grundschicht 5 der Isolierauflage 5, 10 angeordneten Enden der Antennenleiter 7 bzw. der Sammelschienen 9 abdeckt. Entsprechend kann auch für die Ausführungsform nach Fig. 1 oben verfahren werden. Die Antennenleiter 7 in Fig. 1 unten können gleichzeitig als Heizleiter für eine Beheizung der Kraftfahrzeugscheibe 1 eingerichtet sein. Es versteht sich, daß die Abdeckschicht 10 zumindest ein Fenster aufweist, damit Zu- oder Ableitungen an die Antennenleiter 7 bzw. die Sammelschiene 9 angeschlossen werden können. Bei der Ausführungsform nach Fig. 1 unten kann fernerhin die TRM-Beschichtung 2 zusätzlich als Antennenleiter oder als Heizleiter für eine Beheizung der Kraftfahrzeugscheibe 1 eingerichtet sein, wobei sich Anschlußelemente 8 empfehlen, wie sie in Fig. 1 oben dargestellt worden sind. Es versteht sich, daß man stets Vorsorge treffen muß, daß die TRM-Beschichtung 2 zum äußeren Rand hin keinen Kurzschluß mit der Kraftfahrzeugkarosserie erfährt.

## Patentansprüche

1. Kraftfahrzeugscheibe (1) aus zumindest einer Silikatglasscheibe, insbesondere aus Einscheibensicherheitsglas, die auf einer freien Oberfläche eine transmissionsmindernde Beschichtung, TRM-Beschichtung, (2) aus mindestens einem Metall, einer Metallegierung oder einer Metallverbindung aufweist, welche Beschichtung (2) zugleich als Scheibenantenne verwendet ist, wobei die Kraftfahrzeugscheibe (1) in einer Fensteröffnung einer metallischen Kraftfahrzeugkarosserie unter Zwischenschaltung eines umlaufenden Einbauelementes (3) aus Gummi oder Kunststoff oder in Form eines Einbauklebers einsetzbar ist, **dadurch gekennzeichnet,** daß die TRM-Beschichtung (2) Vollflächig aufgebracht ist und einen Einbaurandstreifen (4) überfaßt, daß auf die TRM-Beschichtung (2) im Bereich des Einbaurandstreifens (4) eine Isolierauflage (5) aus nichtleitendem Email aufgebracht und eingebrannt ist, und daß auf der Isolierauflage (5) eine Auflage aus Gummi oder Kunststoff oder in Form eines Einbauklebers als Einbauelement (3) angeordnet ist.

2. Kraftfahrzeugscheibe nach Anspruch 1, dadurch gekennzeichnet, daß die Isolierauflage (5) gegenüber dem Einbauelement (3) verbreitert ist, so daß das Einbauelement (3) eine Innenzone (6) freiläßt, und daß eine oder mehrere Anschlußelemente (8) oder Anschlußsammelschienen (9) für die Scheibenantenne auf der Innenzone (6) der Isolierauflage (5) angeordnet sowie in oder neben der Isolierauflage (5) mit der TRM-Beschichtung (2) leitend verbunden sind.

3. Kraftfahrzeugscheibe nach einem der Ansprüche 1 oder 2, dadurch gekennzeichnet, daß die Isolierauflage aus einer scheibenseitigen Grundschicht (5) und einer Abdeckschicht (10) zweischichtig aufgebaut ist und daß die Abdeckschicht (10) die Anschlußelemente (8) oder die Anschlußsammelschienen (9) auf der Innenzone (6) der Isolierauflage (5) abdeckt.

4. Kraftfahrzeugscheibe nach Anspruch 1, dadurch gekennzeichnet, daß auf die TRM-Beschichtung (2) leitfähige Antennenleiter (7) aufgebracht sind, daß auf die TRM-Beschichtung (2) des Einbaurandstreifens (4) eine Isolierauflage (5) aus nichtleitendem Email aufgebracht und eingebrannt ist und daß das Einbauelement (3) auf der Isolierauflage angeordnet ist.

5. Kraftfahrzeugscheibe nach Anspruch 4, dadurch gekennzeichnet, daß das Einbauelement (3) auf der Isolierauflage (5) eine Innenzone (6) freiläßt und daß die Antennenleiter (7) mit ihren Enden und/oder mit mit den Antennenleitern (7) verbundenen Sammelschienen (9) auf der Innenzone (6) der Isolierauflage (5) angeordnet sind.

6. Kraftfahrzeugscheibe nach den Ansprüchen 4 oder 5, dadurch gekennzeichnet, daß die Isolierauflage aus einer scheibenseitigen Grundschicht (5) und einer Abdeckschicht (10) zweischichtig aufgebaut ist.

7. Kraftfahrzeugscheibe nach Anspruch 6, dadurch gekennzeichnet, daß die Abdeckschicht (10) die auf der Grundschicht (5) der Isolierauflage angeordneten Enden der Antennenleiter (7) und/oder deren Sammelschienen (9) abdeckt.

8. Kraftfahrzeugscheibe nach einem der Ansprüche 4 bis 7, dadurch gekennzeichnet, daß die Antennenleiter (7) gleichzeitig als Heizleiter für eine Beheizung der Kraftfahrzeugscheibe (1) eingerichtet sind - oder umgekehrt.

9. Kraftfahrzeugscheibe nach einem der Ansprüche 4 bis 7, dadurch gekennzeichnet, daß die TRM-Beschichtung (2) zusätzlich als Antennenleiter oder als Heizleiter für eine Beheizung der Kraftfahrzeugscheibe (1) eingerichtet ist.

10. Kraftfahrzeugscheibe nach einem der Ansprüche 1 bis 9, dadurch gekennzeichnet, daß die TRM-Beschichtung (2) aus einer glasseitigen Metallschicht auf Basis von einem Metall der Gruppe "Platin, Iridium, Rhodium" oder Mischungen davon sowie aus einer dünnen Stabilisierungsschicht aus einem Oxid der Metalle der Gruppe "Wismut, Indium, Nickel, Antimon, Zinn, Tantal, Titan, Zink" oder Mischungen dieser Oxide besteht.

11. Kraftfahrzeugscheibe nach einem der Ansprüche 1 bis 10, dadurch gekennzeichnet, daß die TRM-Beschichtung (2) aus einem Silizid oder aus Siliziden von Metallen mit den Ordnungszahlen 22 bis 28 des Periodensystems mit einem Siliziumgehalt von 45 bis 75 Atomprozent aufgebaut ist.

12. Kraftfahrzeugscheibe nach einem der Ansprüche 1 bis 11, dadurch gekennzeichnet, daß die TRM-Beschichtung (2) mit einem Gleichspannungsflächenwiderstand von größer als 20 Ohm, vorzugsweise größer als 60 Ohm, ausgerüstet ist.

13. Kraftfahrzeugscheibe nach einem der Ansprüche 1 bis 12, dadurch gekennzeichnet, daß die Isolierauflage (5) einen Hochfrequenzwiderstand von größer als 10⁶ Ohm aufweist.

14. Kraftfahrzeugscheibe nach einem der Ansprüche 1 bis 13, dadurch gekennzeichnet, daß die TRM-Beschichtung (2) unter der Isolierauflage (5) eine verschwindend geringe Leitfähigkeit aufweist.

## Claims

1. A motor vehicle window glass (1) comprising at least one silicate glass panel, particularly of toughened safety glass, which has a transmission-reducing coating or TRM coating (2) of at least one metal, metal alloy or metal compound on one free surface, which coating (2) is employed at the same time as a disc aerial, wherein the motor vehicle window glass (1) can be inserted in a window aperture of a metal motor vehicle body with a surrounding fitting element (3), of rubber or plastic or in the form of a mounting adhesive, interposed therebetween, characterised in that the TRM coating (2) is deposited all over and overlaps a fitting edge strip (4), that an insulating layer (5) of non-conducting enamel is deposited and fired on the TRM coating (2) in the region of the fitting edge strip (4), and that a layer comprising rubber or plastic or in the form of a mounting adhesive is disposed on the insulating layer (5) as the fitting element (3).

2. A motor vehicle window glass according to claim 1, characterised in that the insulating layer (5) is widened in relation to the fitting element (3), so that the fitting element (3) exposes an inner zone (6), and that one or more connecting elements (8) or bus strips (9) for the disc aerial are disposed on the inner zone (6) of the insulating layer (5) and are conductively connected to the TRM coating (2) in or near the insulating layer (5).

3. A motor vehicle window glass according to one of claims 1 or 2, characterised in that the insulating layer is constructed as a double layer from a ground coat (5) on the window glass side and a covering coat (10), and that the covering coat (10) covers the connecting elements (8) or the bus strips (9) on the inner zone (6) of the insulating layer (5).

4. A motor vehicle window glass according to claim 1, characterised in that conductive aerial leads (7) are deposited on the TRM coating (2), that an insulating layer (5) of non-conducting enamel is deposited and fired on the TRM coating (2) of the fitting edge strip (4), and that the fitting element (3) is disposed on the insulating layer.

5. A motor vehicle window glass according to claim 4, characterised in that the fitting element (3) exposes an inner zone (6) on the insulating layer (5) and that the aerial leads (7) are disposed with their ends and/or with bus strips (9) connected to the aerial leads (7) on the inner zone (6) of the insulating layer (5).

6. A motor vehicle window glass according to claims 4 or 5, characterised in that the insulating layer is constructed as a double layer from a ground coat (5) on the window glass side and a covering coat (10).

7. A motor vehicle window glass according to claim 6, characterised in that the covering coat (10) covers the ends of the aerial leads (7) and/or their bus strips (9) disposed on the ground coat (5) of the insulating layer.

8. A motor vehicle window glass according to any one of claims 4 to 7, characterised in that the aerial leads (7) are at the same time arranged as heating leads for heating the motor vehicle window glass (1) - or vice versa.

9. A motor vehicle window glass according to any one of claims 4 to 7, characterised in that the TRM coating (2) is additionally arranged as an aerial lead or as a heating lead for heating the motor vehicle window glass (1).

10. A motor vehicle window glass according to any one of claims 1 to 9, characterised in that the TRM coating (2) consists of a metal layer on the glass side based on a metal of the group comprising platinum, iridium and rhodium or mixtures thereof, and of a thin stabilising layer comprising an oxide of the metals of the group comprising bismuth, indium, nickel, antimony, tin, tantalum, titanium and zinc or mixtures of these oxides.

11. A motor vehicle window glass according to any one of claims 1 to 10, characterised in that the TRM coating (2) is constructed from a silicide or silicides of metals of atomic numbers 22 to 28 of the Periodic System with a silicon content of 45 to 75 atomic percent.

12. A motor vehicle window glass according to any one of claims 1 to 11, characterised in that the TRM coating (2) is provided with a DC surface resistance greater than 20 ohms, preferably greater than 60 ohms.

13. A motor vehicle window glass according to any one of claims 1 to 12, characterised in that the insulating layer (5) has a high-frequency resistance greater than 10⁶ ohms.

14. A motor vehicle window glass according to any one of claims 1 to 13, characterised in that the TRM coating (2) beneath the insulating layer (5) has a conductivity which is infinitesimally small.

## Revendications

1. Vitre (1) de véhicule automobile constituée par une plaque de verre à base de silicates, notamment un verre de sécurité trempé, qui comporte, sur une surface libre, un revêtement réduisant la transmission, un revêtement TRM (2) constitué par au moins un métal, un alliage métallique ou un composé métallique, lequel revêtement (2) est utilisé simultanément comme antenne-vitre, la vitre (1) du véhicule automobile pouvant être insérée dans une ouverture de fenêtre d'une carrosserie métallique du véhicule automobile moyennant l'interposition d'un élément circonférentiel d'insertion (3) en caoutchouc ou en matière plastique ou se présentant sous la forme d'une colle de montage, caractérisée en ce que le revêtement TRM (2) est déposé sur toute la surface et recouvre une bande marginale de montage (4), qu'un support isolant (5) formé d'un émail non conducteur est déposé et cuit de façon usuelle sur le revêtement TRM (2), dans la zone de la bande marginale de montage (4), et qu'un support en caoutchouc ou en matière plastique ou sous la forme d'une colle de montage est disposé en tant qu'élément de montage (3) sur le support isolant (2).

2. Vitre de véhicule automobile selon la revendication 1, caractérisée en ce que le support isolant (5) est élargi par rapport à l'élément de montage (3) de sorte que l'élément de montage (3) laisse une zone intérieure (6) dégagée, et qu'un ou plusieurs éléments de raccordement (8) ou barres omnibus de raccordement (9) pour l'antenne-vitre sont disposés sur la zone intérieure (6) du support isolant (5) et sont raccordés selon une liaison conductrice au revêtement TRM (2), dans ou à côté du support isolant (5).

3. Vitre de véhicule automobile selon l'une des revendications 1 ou 2, caractérisée en ce que le support isolant est constitué de deux couches, à savoir une couche de base (5) située du côté de la vitre et une couche de revêtement (10), et que la couche de revêtement (10) recouvre les éléments de raccordement (8) ou les barres omnibus de raccordement (9) sur la zone intérieure (6) du support isolant (5).

4. Vitre de véhicule automobile selon la revendication 1, caractérisée en ce que des éléments conducteurs d'antenne (7) sont disposés sur le revêtement TRM (2), qu'un support isolant (5) formé d'un émail non conducteur est disposé et cuit sur le revêtement TRM (2) de la bande marginale de montage (4) et que l'élément de montage (3) est disposé sur le support isolant.

5. Vitre de véhicule automobile selon la revendication 4, caractérisée en ce que l'élément de montage (3) libère une zone intérieure (6) sur le support isolant (5) et que les extrémités des éléments conducteurs d'antenne (7) et/ou des barres omnibus (9) raccordées aux éléments conducteurs d'antenne (7) sont disposées sur la zone intérieure (6) du support isolant (5).

6. Vitre de véhicule automobile selon les revendications 4 ou 5, caractérisée en ce qu'un support isolant est formé de deux couches, à savoir la couche de base (5) située du côté de la vitre et une couche de revêtement (10).

7. Vitre de véhicule automobile selon la revendication 6, caractérisée en ce que la couche de revêtement (10) recouvre les extrémités, qui sont disposées sur la couche de base (5) du support isolant, des éléments conducteurs d'antenne et des barres omnibus (9) de ces éléments.

8. Vitre de véhicule automobile selon l'une des revendications 4 à 7, caractérisée en ce que les éléments conducteurs d'antenne (7) sont agencés simultanément en tant que conducteurs de chauffage pour un chauffage de la vitre (1) du véhicule automobile - ou inversement.

9. Vitre de véhicule automobile selon l'une des revendications 4 à 7, caractérisé en ce que le revêtement TRM (2) est agencé en outre en tant qu'élément conducteur d'antenne ou en tant que conducteur de chauffage pour le chauffage de la vitre (1) du véhicule automobile.

10. Vitre de véhicule automobile selon l'une des revendications 1 à 9, caractérisée en ce que le revêtement TRM (2) est constitué par une couche métallique située du côté du verre et formée à partir d'un métal du groupe "platine, iridium, rhodium" ou de mélanges de ces produits, ainsi que par une couche mince de stabilisation constituée par un oxyde des métaux "bismuth, indium, nickel, antimoine, étain, tantale, titane, zinc" ou des mélanges de ces oxydes.

11. Vitre de véhicule automobile selon l'une des revendications 1 à 10, caractérisée en ce que le revêtement TRM (2) est constituée par un siliciure ou par des siliciures de métaux possédant les numéros atomiques 22 à 28 du système périodique, avec une teneur en silicium comprise entre 45 et 75 pour cent d'atomes.

12. Vitre de véhicule automobile selon l'une des revendications 1 à 11, caractérisée en ce que le revêtement TRM (2) est équipé d'une résistance de surface en tension continue, supérieure à 20 ohms et de préférence supérieure à 60 ohms.

13. Vitre de véhicule automobile selon l'une des revendications 1 à 12, caractérisée en ce que le support isolant (5) possède une résistance aux hautes fréquences supérieure à 10⁶ ohms.

14. Vitre de véhicule automobile selon l'une des revendications 1 à 13, caractérisée en ce que le revêtement TRM (2) possède, au-dessous du support isolant (5), une conductibilité faible au point de disparaître.
